# EUROPÄISCHE PATENTANMELDUNG

(11) **EP 0 826 709 A1**
(43) Veröffentlichungstag der Anmeldung: **04.03.1998**
(21) Anmeldenummer: 97114704.6
(22) Anmeldetag: 25.08.1997
(51) Int. Cl.: C08G 18/83, C08G 18/08, C09D 175/04

(54) **Wässrige Beschichtungsmittelzusammensetzung**

(30) Priorität: 27.08.1996 DE 19634598
(71) Anmelder: BASF AKTIENGESELLSCHAFT, 67056 Ludwigshafen (DE)
(72) Erfinder: Kokel, Nicolas, Dr., 67069 Ludwigshafen (DE); Rau, Maria Gyopar, Dr., 67098 Bad Dürkheim (DE)
(74) Vertreter: Isenbruck, Günter, Dr.

(57) **Zusammenfassung**

Wäßrige Beschichtungszusammensetzung, enthaltend:
a) ein organisches, freie ond/oder neutralisierte Säuregruppen tragendes Polymeres in wäßriger lösung und
b) einen Vernetzer nach der allgemeinen Strukturformel I 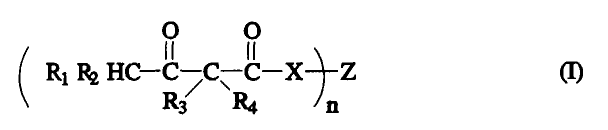 wobei
   R₁, R₂, R₃ und R₄ unabhängig voneinander für Wasserstoff oder Alkyl-, Aryl- oder Aralkylreste mit 1 bis 24 C-Atomen oder Gemischen aus zwei oder mehr davon,
   X für Sauerstoff, Schwefel und/oder -N(R₅)- steht,
      wobei R₅ für einen Alkyl-, Aryl- oder Aralkylrest mit 1 bis 24 C-Atomen oder Wasserstoff steht
      sowie
   Z für einen n-funktionellen, gegebenenfalls durch weitere Gruppen substituierten Alkyl-, Aryl- oder Aralkylrest steht,
   dadurch gekennzeichnet, daß die Molmasse des Vernetzers unterhalb von 10.000 liegt.

## Beschreibung

Die Erfindung betrifft eine wäßrige Beschichtungsmittelzusammensetzung, enthaltend ein freie und/oder neutralisierte Säuregruppen tragendes Polymeres und einen niedermolekularen Vernetzer, wobei der Vernetzer mindestens zwei zur Reaktion mit anionischen Gruppen befähigte Zentren aufweist.

Wässrige Dispersionen, die Polyurethane als Bindemittel enthalten, sind allgemein bekannt (vgl. D. G. Oertel, *Kunststoffhandbuch 7*, 2. Aufl., 1983, Carl Hanser Verlag München Wien, S. 24 bis 25 und S. 571 bis 574). Es ist weiterhin bekannt, die Polyurethandispersionen als Beschichtungsmittel, z.B. als Lacke oder Druckfarben zu verwenden.

In verarbeitungstechnischer und wirtschaftlicher Hinsicht und im Hinblick auf die wünschenswerten Eigenschaften der mit den Lacken hergestellten Beschichtungen müssen dabei an die wäßrigen Polyurethandispersionen eine Reihe von Anforderungen gestellt werden, die von aus dem Stand der Technik bekannten Systemen bisher nicht im geforderten Maße erfüllt werden.

Solche Anforderungen bezüglich der Gebrauchseigenschaften sind insbesondere:
- Die Lacke sollen über einen längeren Zeitraum lagerbar sein, ohne daß sich ihre Eigenschaften (z.B. die rheologischen Eigenschaften) oder die Eigenschaften der damit hergestellten Beschichtungen verändern.
- Die Lacke sollen möglichst geringe Mengen an Lösungsmitteln, Verlaufsmitteln oder sonstigen, leichtflüchtigen organischen Bestandteilen enthalten, um die Emissionen von organischen Verbindungen beim Auftragen und Trocknen der Lacke zu minimieren.
- Nach dem Auftragen auf das Werkstück soll der Lack rasch trocknen bzw. aushärten, damit das Werkstück bereits nach kurzer Zeit gebrauchsfertig ist oder weiterverarbeitet werden kann.
- Die Beschichtungsmittel sollen bei der Verarbeitung möglichst wenig zum Schäumen neigen.

An qualitativ hochwertige Beschichtungen und Oberflächen aus Polyurethanlacken werden folgende Anforderungen gestellt:
- Glatte Oberfläche und ein hoher Glanz
- Resistenz gegenüber Feuchtigkeit, Wasserdampf und Chemikalien wie verdünnten Laugen und Säuren sowie gegenüber organischen Lösungsmitteln oder Tensiden
- Unempfindlichkeit gegenüber mechanischen Beanspruchungen wie Schlag, Stoß oder Reibung
- Keine Eigenfarbe oder Störstellen wie Blasen oder Risse

In der Regel wird zur Herstellung mechanisch und chemisch möglichst belastbarer Überzüge eine chemische Vernetzung der im Beschichtungsmittel enthaltenen Polymeren durchgeführt.

Die Löslichkeit bzw. Dispergierbarkeit von polymeren Bindemittelkomponenten in Wasser wird häufig durch in die Polymere chemisch eingebaute neutralisierte Säuregruppen wie beispielsweise Carboxylat-, Sulfonat- oder Phosphonatgruppen gewährleistet, die als Gegenionen in der Regel Ammonium-Kationen auf Basis von Ammoniak oder von zumindest in der Hitze flüchtigen organischen Aminen aufweisen. Bei der meist unter Hitzeeinwirkung ablaufenden Trocknung der aus derartigen Polymerlösungen und insbesondere -dispersionen hergestellten Flächengebilde und Beschichtungen wird zwar ein Großteil der ursprünglich vorliegenden Carboxylatgruppen durch Abspaltung des als Kation vorliegenden Ammoniaks bzw. Amins in Carboxylgruppen überführt. Die dann vorliegenden, Carboxylgruppen aufweisenden Polymere zeigen eine oftmals noch nicht gänzlich befriedigende Wasserresistenz. Außerdem beschleunigen diese Carboxylgruppen katalytisch den unerwünschten, hydrolytischen Abbau von Estergruppen aufweisenden Polymeren, wodurch das mechanische Werteniveau der genannten Flächengebilde, insbesondere in feuchter Umgebung, schnell verschlechtert werden kann.

Es ist daher vorteilhaft, eine Vernetzung der wasserlöslichen bzw. wasserdispergierbaren Polymeren über die gegebenenfalls neutralisierten Säuregruppen am Polymeren vorzunehmen. Hierbei wird zum einen durch die Vernetzung eine höhere mechanische Stabilität der Beschichtung sowie eine verbesserte Resistenz gegen Chemikalien erreicht, zum anderen ist die Vernetzung in der Regel mit einer Hydrophobierung der ionischen Gruppen verbunden, so daß die Empfindlichkeit gegenüber Wasser oder wäßrigen Lösungsmitteln bei der vernetzten Beschichtung reduziert ist.

Versuche, eine solche Vernetzung vorzunehmen, sind aus dem Stand der Technik bereits bekannt.

So wird die Vernetzung von Carboxylgruppen mit Polyaziridin-Verbindungen z.B. in der US-A-4,301,053 und in der US-A-5,430,049 beschrieben.

Die Vernetzung mit Polycarbodiimiden ist beispielsweise aus der EP-A1 0 121 083, der EP-B1 0 198 343 oder der EP-A1 0 277 361 bekannt.

Schließlich ist noch die Vernetzung mit Polyepoxiden in der EP-A2 0 512 710 sowie in der EP-A1 0 578 068 erwähnt.

Die beschriebenen Polyaziridin-, Polycarbodiimid- und Polyepoxid-Vernetzer weisen gemeinsam den gravierenden Nachteil auf, däß sie toxikologisch bedenklich sind. Darüber hinaus sind entsprechende Zusammensetzungen nicht lagerstabil.

In der EP-A1 0 663 412 wird eine effiziente Vernetzungsmethode beschrieben, wobei eine Carboxylgruppen aufweisende Polyurethan-Dispersion mit einer Acetoacetatgruppen aufweisenden Dispersion eines vinylischen Polymeren kombiniert wird. Aus den beschriebenen Beschichtungsmittelzusammensetzungen entstehen vernetzte Filme, die ein hohes Maß an Beständigkeit, insbesondere gegenüber Lösungsmitteln aufweisen. Diese Zusammensetzungen haben jedoch den Nachteil, daß sie zwangsläufig zwei unterschiedliche Dispersionen in einem ausgewählten Verhältnis enthalten, so daß der Lackformulierer in seinem Freiraum bei der Lackzubereitung beschnitten wird. Durch die begrenzte Kombinierbarkeit beider Dispersionen muß das Eigenschaftsprofil der entstehenden Beschichtungsmittelzusammensetzung immer ein Kompromiß aus den Eigenschaften der beiden einzelnen Dispersionen sein. Darüber hinaus ist der Fachmann auf eine spezielle Kombination einer Polyurethan-Dispersion und der Dispersion eines vinylischen Polymeren angewiesen.

Die Aufgabe der vorliegenden Erfindung ist es daher, eine wäßrige Beschichtungsmittelzusammensetzung zur Verfügung zu stellen, die zum einen toxikologisch unbedenklich ist und zum anderen dem Fachmann die Formulierungsfreiheit soweit erhält, daß das Vernetzersystem mit möglichst vielen unterschiedlichen Polymeren und möglichst vielen unterschiedlichen Dispersionen angewandt werden kann.

Die Aufgabe konnte überraschenderweise dadurch gelöst werden, daß man freie und/oder neutralisierte Säuregruppen tragende Polymere in Beschichtungsmittelzusammensetzungen zusammen mit einem Acetoacetatgruppen oder deren Derivate tragenden Vernetzer einsetzt. Die Beschichtungsmittelkombination ist toxikologisch weitgehend unbedenklich, lagerstabil und auf eine Vielzahl von Bindemittelkombinationen anwendbar.

Gegenstand der Erfindung ist daher eine wäßrige Beschichtungsmittelzusammensetzung, enthaltend
a) ein organisches, freie und/oder neutralisierte Säuregruppen tragendes Polymeres in wäßriger Lösung oder Dispersion und
b) einen Vernetzer nach der allgemeinen Strukturformel I 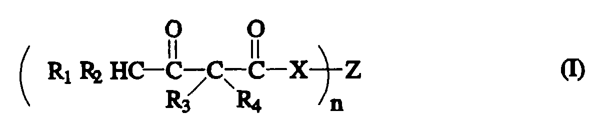 wobei
   R₁, R₂, R₃ und R₄ unabhängig voneinander für Wasserstoff oder Alkyl-, Aryl- und/oder Aralkylreste mit 1 bis 24 C-Atomen oder Gemische aus zwei oder mehr davon,
   X für Sauerstoff, Schwefel und/oder -N(R₅)- steht,
      wobei R₅ für einen Alkyl-, Aryl- oder Aralkylrest mit 1 bis 24 C-Atomen oder Wasserstoff steht
      sowie
   Z für einen n-funktionellen, gegebenenfalls durch weitere Gruppen substituierten Alkyl-, Aryl- oder Aralkylrest steht,
   wobei die Molmasse des Vernetzers unterhalb von 10.000, bevorzugt unterhalb von 5.000 und besonders bevorzugt unterhalb von 1.000, liegt.

In einer bevorzugten Ausführungsform kann n Werte von 2 bis etwa 8 annehmen.

Die Begriffkombination "neutralisierte Säuregruppen" bezieht sich im Sinne der vorliegenden Erfindung auf negative Ladungen tragende Säuregruppen wie beispielsweise Carboxylate, Sulfonate oder Phosphonate (zusammen mit den jeweiligen Gegenionen), die mit dem Polymerrückgrat kovalent verbunden sind.

Die Begriffkombination "freie Säuregruppen" bezieht sich auf kovalent mit dem Polymerrückgrat verbundene Säuregruppen, wie beispielsweise Carboxyl-, Sulfonsäure- und/oder Phosphonsäuregruppen. Diese können in der Regel durch Neutralisation mit einer Base in anionische Gruppen, d.h. in Säureanionen und damit in neutralisierte Säuregruppen der erstgenannten Art umgewandelt werden.

Als im Sinne der Erfindung verwendbare organische, freie und/oder neutralisierte Säuregruppen tragende Polymere, welche sich in wäßriger Lösung bzw. in wäßriger Dispersion befinden, können eine Vielzahl unterschiedlicher Polymerer eingesetzt werden. In der Regel wird die Wasserlöslichkeit der ansonsten üblicherweise hydrophoben Polymerkette durch das Einführen von Carboxyl-, Sulfonsäure- oder auch Phosphonsäuregruppen bewirkt. Hierbei sind in der Regel zur Hydrophilierung Carboxyl- bzw. Sulfonsäuregruppen bevorzugt, wobei insbesondere die Hydrophilierung durch Carbonsäuregruppen eine große Rolle spielt.

Eine weitere Möglichkeit zur Erhöhung der Hydrophilie der Polymeren und damit zur Erhöhung der Wasserdispergierbarkeit ist der Einbau von nichtionischen Polyethereinheiten zusammen mit freien und/oder neutralisierten Säuregruppen in das Polymere. Gegebenenfalls können die Säuregruppen zur Herstellung der Dispersion vollständig oder zumindest weitgehend im freien Zustand bleiben, wenn die durch die Polyetherkette eingeführte Hydrophilie ausreicht um die Polymerkette in Wasser dispergierbar zu machen. Solche hydrophilierenden Polyetherketten sind in der Regel zu mindestens 50 Gew.-% aus Oxyethyleneinheiten aufgebaut.

Durch die Einführung solcher Wasserlöslichkeit oder zumindest Dispergierbarkeit vermittelnder Gruppen lassen sich die unterschiedlichsten Polymerketten in Wasser löslich bzw. zumindest in Wasser dispergierbar machen.

Zu den Polymeren bei denen eine solche Hydrophilierung möglich ist zählen beispielsweise die Polyurethanharze. Solche Polyurethanharze werden in der Regel als sogenannte Polyester- oder Polyetherpolyurethanharze hergestellt.

Die Herstellung von wasserdispergierbare Polyurethanharze enthaltenden wässrigen Dispersionen erfolgt üblicherweise durch Umsetzung von
a) mehrwertigen Isocyanaten mit 4 bis 30 C-Atomen mit
b) Polyolen, wie beispielsweise Polyester- und/oder Polyetherpolyolen und
c) gegebenenfalls weiteren, mindestens zwei gegenüber Isocyanaten reaktive Gruppen tragenden Verbindungen, wobei es sich bei den gegenüber Isocyanaten reaktiven Gruppen bevorzugt um Hydroxylgruppen oder primäre oder sekundäre Aminogruppen handelt sowie
d) von b) und c) verschiedenen Verbindungen, die wenigstens eine, bevorzugt mindestens zwei Isocyanatgruppen oder gegenüber Isocyanatgruppen reaktive Gruppen enthalten und darüberhinaus wenigstens eine freie und/oder neutralisierte Säuregruppe tragen
   und anschließender Dispergierung des so erhaltenen Polyurethans in Wasser.

Als Monomere a) kommen die üblicherweise in der Polyurethanchemie eingesetzten Polyisocyanate in Betracht.

Insbesondere zu nennen sind die Diisocyanate X(NCO)₂, wobei X für einen aliphatischen Kohlenwasserstoffrest mit 4 bis 12 C-Atomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Isocyanate sind Tetramethylendiisocyanat, Hexamethylendiisocyanat, Dodecamethylendiisocyanat, 1,4-Diisocyanatocyclohexan, 1-Isocyanato,-3,5,5-trimethyl-5-isocyanatocyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, Tetramethylxylylendiisocyanat (TMXDI), 2,4'-Diisocyanato-diphenylmethan, p-Xylylendiisocyanat, die Isomeren des Bis-(4-isocyanatocyclohexyl)methans, wie das trans/trans-, das cis/cis- und das cis/trans-Isomere sowie diese Verbindungen enthaltende Gemische.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind Mischungen von aromatischen Isocyanaten wie 2,4-Diisocyanatotoluol und/oder 2,6-Diisocyanatotoluol mit aliphatischen und/oder cycloaliphatischen Isocyanaten wie Hexamethylendiisocyanat oder IPDI besonders vorteilhaft, wobei das bevorzugte Mischungsverhältnis von aliphatischen zu aromatischen Isocyanaten 4:1 bis 1:4 beträgt.

Als Komponente a) können auch Isocyanate eingesetzt werden, die neben freien Isocyanatgruppen weitere verkappte Isocyanatgruppen wie beispielsweise Uretidon- oder Carbodiimidgruppen enthalten.

Gegebenenfalls können auch Isocyanate mit nur einer Isocyanatgruppe mitverwendet werden, wobei ihr Anteil im allgemeinen 10 mol-% nicht übersteigen sollte. Diese Isocyanate tragen in der Regel weitere funktionelle Gruppen wie beispielsweise olefinisch ungesättigte Gruppen oder Carbonylgruppen und dienen zur Einführung dieser funktionellen Gruppen in das Polyurethan. Hierdurch kann eine weitere Modifizierung des Polyurethans wie Beispielsweise eine Pfropfung des Polyurethans durch radikalische Polymerisation olefinisch ungesättigter Verbindungen in Gegenwart eines olefinisch ungesättigte Gruppen tragenden Polyurethans erreicht werden oder gegebenenfalls können Vernetzung oder andere polymeranaloge Umsetzungen stattfinden.

Verzweigte oder vernetzte Polyurethane können z.B. unter Verwendung von drei- oder mehrwertige Isocyanaten hergestellt werden. Handelsübliche Verbindungen sind beispielsweise das Isocyanurat oder das Biuret des Hexcamethylendiisocyanats.

Als Polyole b) kommen vornehmlich höhermolekulare Polyole, bevorzugt Diole in Betracht, die ein Molekulargewicht von etwa 500 bis 5000, bevorzugt etwa 1000 bis 3000 aufweisen.

Bei den Polyolen handelt es sich insbesondere um Polyesterpolyole, die z.B. aus Ullmanns Ecyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhältlich sind. Anstelle der freien Carbonsäuren können auch die entsprechenden Polycarbonsäureanhydride oder die entsprechenden Polycarbonsäureester von niederen Alkoholen oder deren Gemische zur Herstellung der Polyesterpolyole eingesetzt werden. Die Polycarbonsäuren können aliphatisch, cycloaliphatisch, araliphatisch, aromatisch oder heterocyclisch sein und gegebenenfalls durch Halogenatome substituiert und/oder ungesättigt sein. Als Beispiele hierfür seinen genannt: Korksäure, Azelainsäure, Phthalsäure, Isophthalsäure, Phthalsäureanhydrid, Tetrahydrophthalsäureanhydrid, Hexahydrophthalsäureaahydrid, Tetrachlorphthalsäureanhdrid, Endomethylentetrahydrophthalsäureanhydrid, Glutarsäureanhydrid, Maleinsäure, Maleinsäureanhydrid, Fumarsäure oder dimere Fettsäuren. Besonders bevorzugt sind z.B. Bernsteinsäure, Adipinsäure, Dodecandicarbonsäure und/oder Sebacinsäure.

Als mehrwertige Alkohole kommen z.B. Ethylenglycol, Propan-1,2-diol, Propan-1,3-diol, Butan-1,4-diol, Buten-1,4-diol, Butin-1,4-diol, Pentan-1,5-diol, Neopentylglycol, Bis-(hydroxymethyl)cyclohexan, 2-Methyl-propan-1,3-diol, Methylpentandiole, Diethylenglycol, Triethylenglycol sowie weitere Polyether wie beispielsweise Tetraethylenglycol, Polyethylenglycol, Dipropylenglycol, Polypropylenglycole, Dibutylenglycole oder Polybutylenglycole sowie Polyether mit einer noch höheren Anzahl an Kohlenstoffatomen zwischen den Ethersauerstoffen wie beispielsweise Polytetrahydrofuran infrage.

Bevorzugt sind beispielsweise Neopentylglycol, Ethylenglycol, Butan-1,4-diol, Hexan-1,4-diol, Octan-1,4-diol und Dodecan-1,12-diol.

Geeignet sind ebenso Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Beispiele für solche Lactone sind ε-Caprolacton, β-Propiolacton, γ-Butyrolacton und/oder Methyl-ε-Caprolacton.

Daneben kommen als Monomere b) auch Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Starterkomponenten mit reaktionsfähigen Wasserstoffatomen, wie Alkohol oder Amine, z.B. Wasser, Ethylenglycol, Propan-1,2-diol, Propan-1,3-diol, 1,2-Bis(4-hydroxydiphenyl)-propan oder Anilin erhältlich.

Ebenfalls geeignet sind Polyhydroxyolefine, bevorzugt solche mit 2 endständigen Hydroxylgruppen, z.B. α-ω-Dixydroxypolybutadien, α-ω-Dihydroxypolymethacrylester oder α-ω-Dihydroxypolyacrylester als Komponente b). Weitere geeignete Komponenten b) sind beispielsweise Polyacetale, Polysiloxane und Alkydharze.

Die Polyole können auch als Gemische in beliebigen Verhältnissen eingesetzt werden.

Die Härte und das Elastizitätsmodul der Polyurethane lassen sich erhöhen, wenn als Komponente c) beispielsweise niedermolekulare Diole mit einem Molekulargewicht von etwa 62 bis etwa 500, vorzugsweise etwa 62 bis etwa 200 g/mol eingesetzt werden. Beispiele für solche Monomere sind die im Rahmen des Aufbaus der Polyesterkomponente b) beschriebenen, niedermolekularen Polyole. Insbesondere werden die kurzkettigen Alkandiole wie Neopentylglycol und die unverzweigten Diole mit 2 bis 12 C-Atomen und einer geradhahligen Anzahl von C-Atomen bevorzugt.

Die Hydroxylzahl der OH-Gruppen tragenden Komponenten sollte in der Regel zwischen etwa 20 und etwa 300, bevorzugt zwischen etwa 50 und etwa 200 mg KOH/g Substanz liegen.

Ebenso als Komponente c) einsetzbar sind beispielsweise Di- oder Polyamine wie beispielsweise Hydrazin, Ethylendiamin, Propylendiamine, Butylendiamine oder höhere Alkylendiamine. Ferner eignen sich Verbindungen die sowohl eine primäre, sekundäre oder tertiäre Aminogruppe als auch beispielsweise eine Hydroxygruppe aufweisen. Hierzu zählen z.B. Ethanolamin, Diethanolamin, Triethanolamin, Methyl-diethanolamin, Ethyl-diethanolamin und dergleichen. In der Regel sollten diese Verbindungen mindestens zwei gegenüber Isocyanaten reaktive Gruppen aufweisen, wobei in untergeordneten Mengen von beispielsweise maximal etwa 10 Gew.-%, bevorzugt jedoch weniger als 5 Gew.-% auch monofunktionelle Verbindungen eingesetzt werden einkönnen.

Um Wasserdispergierbarkeit zu erreichen wird neben den schon beschriebenen Komponenten a) bis c) noch eine weitere Komponente d) zur Herstellung der Polyurethane in die Umsetzung mit einbezogen.

Hierbei handelt es sich um Verbindungen, die wenigstens eine Isocyanatgruppe oder gegenüber Isocyanaten reaktionsfähige Gruppe und darüberhinaus wenigstens eine freie oder neutralisierte Säuregruppe tragen. Als Monomere mit solchen freien und/oder neutralisierten Säuregruppen kommen üblicherweise aliphatische, cycloaliphatische, araliphatische oder aromatische Carbonsäuren, Sulfonsäuren oder Phosphonsäuren in Betracht, die mindestens eine Isocyanatgruppe oder eine gegenüber Isocyanaten reaktionsfähige Gruppe tragen. Bevorzugt sind die Dihydroxyalkylcarbonsäuren, insbesondere diejenigen mit 3 bis 10 Kohlenstoffatomen, wie sie beispielsweise in der US-A 3,412,054 beschrieben werden. Zur Einführung von Carboxylgruppen in Polyurethanharze haben sich als Reaktionskomponente d) insbesondere Dimethylolpropionsäure, Milchsäure, Äpfelsäure, Weinsäure, ε-Hydroxycapronsäure, Rhizinusöl, Fettsäure oder ε-Caprolacton bewährt.

Weiterhin eignen sich entsprechende Dihydroxysulfonsäuren und Dihydroxyalkanphosphonsäuren wie beispielsweise 2,3-Dihydroxypropanphosphonsäure oder Phosporsäure-bis-glycolester.

Es besteht ebenso die Möglichkeit, Säuregruppen in Polyurethanharze einzuführen indem als Komponente d) zur Herstellung der Polyurethane ein Polyesterharz eingesetzt wird welches bereits Säuregruppen trägt. Solche Polyesterharze lassen sich in der Regel durch Polykondensation von Polyhydroxykomponenten mit Polycarboxylaten erhalten, wobei die freie oder neutralisierte Säuregruppe entweder in Form der Polyhydroxykomponente oder als Polycarboxylat in die Polyesterkette eingeführt wird. Hierbei ist darauf zu achten, daß die freie oder neutralisierte Säuregruppe insbesondere soweit es sich dabei um eine Carboxylatgruppe handelt, nicht oder nur unwesentlich am Polykondensationsprozeß teilnimmt. Gegebenenfalls muß die Gruppe durch geeignete Schutzmaßnahmen an einer solchen Reaktion gehindert werden. Es ist ebenfalls möglich, Gemische verschiedener, freie und/oder neutralisierte Säuregruppen tragender Verbindungen zum Aufbau des Polyesterharzes zu verwenden.

Beispiele für solche Polyester sind Dihydroxyverbindungen mit einem Molekulargewicht von etwa 500 bis 10.000 g/mol und mindestens 2 Carboxylatgruppen, wie sie beispielsweise aus der DE-A1 39 11 827 bekannt sind. Sie sind durch Umsetzung von Dihydroxyverbindungen mit Tetracarbonsäuredianhydriden wie Pyromellithinsäuredianhydrid oder Cyclopentantetracarbonsäuredianhydrid im Molverhältnis 2:1 bis 1,05:1 in einer Polyadditionsreaktion erhältlich. Als Dihydroxyverbindungen sind insbesondere die Diole aus b) oder c) geeignet.

Auf diese Weise können anstatt der Carboxylgruppen ebenso Sulfonsäuregruppen eingeführt werden, indem anstatt der Tetracarbonsäuredianhydride beispielsweise Dicarboxysulfonsäuren wie beispielsweise Sulfoisophthalsäure, Sulfoterephthalsäure oder Sulfobernsteinsäure oder deren Ester mit Diolen umgesetzt werden.

Insbesondere bietet sich diese Form der Umsetzung auch zur Einführung von Sulfonatgruppen in die Polyesterkette an. Hierzu werden polyfunktionelle Alkohole, in der Regel mit einem Molekulargewicht zwischen 62 und 1.000, mit Polycarbonsäuren des Molekulargewichts von etwa 98 bis 500 oder Anhydriden derartiger Polycarbonsäuren zusammen mit Sulfonatgruppen aufweisenden Aufbaukomponenten nach bekannten Methoden polykondensiert. Solche Sulfonatgruppen aufweisenden Komponenten sind beispielsweise die 5-Sulfoisophthalsäure, Sulfobenzoesäure, Sulfophthalsäure, Dimethylsulfoisophthalsäure, 3-Hydroxy-5-Sulfobenzoesäure und 2-Hydroxy-5-Sulfobenzoesäure oder deren Lithium-, Kalium-, Natrium-, Magnesium-, Calcium- oder tertiäre Ammoniumsalze. Auch Sulfonatdiole können geeignet sein. Vorzugsweise werden die Sulfonsäuregruppen mit Lithium-, Kalium oder Natriumhydroxid bzw. -carbonat oder -bicarbonat oder insbesondere bevorzugt mit tertiären Aminen neutralisiert. Als tertiäre Amine zur Neutralisation der Sulfonsäuregruppen kommen beispielsweise Triethylamin, N,N-Dimethylethanolamin, N-Methyldiethanolamin oder andere tertiäre Amine in Betracht.

Grundsätzlich möglich ist auch die Verwendung von entsprechenden freien Carboxyl- und/oder Sulfonsäuregruppen aufweisenden Säuren bei der Durchführung der Polykondensationsrenktion gegebenenfalls unter anschließender, zumindest teilweiser Neutralisation der auf diese Weise in die Polyesterharze eingebauten Carbon- und/oder Sulfonsäuregruppen. Während der Polykondensation können geeignete organische Lösungsmittel anwesend sein, wie beispielsweise n-Methylpyrrolidon, Diethylenglykoldimethylether, Methylethylketon, Methylisobutylketon, Aceton, Xylol, Toluol, Butylacetat bzw. Gemische dieser oder anderer Lösungsmittel. Die verwendeten organischen Lösungsmittel können vor, während oder nach dem Dispergierschritt ganz oder teilweise, gegebenenfalls azeotrop und/oder durch Anlegen eines Vakuums bzw. eines verstärkten Inertgasstroms aus dem Reaktionsgemisch entfernt werden. Die so erhältlichen Carboxyl- und/oder Sulfonsäuregruppen tragenden Polyesterharze sollten in der Regel dahingehend hergestellt werden, daß sie mindestens zwei Urethangruppen gegenüber reaktionsfähige Gruppierungen, üblicherweise am Ende der Polymerkette, enthalten.

Die als Komponente d) einsetzbaren Verbindungen können entweder mit neutralisierten oder mit freien Säuregruppen oder als Gemisch aus beiden Formen in das Polyurethan eingebaut werden. Welche Form zum Einbau gewählt wird ist von der jeweils eingesetzten Komponente d) abhängig. In der Regel ist es jedoch so, daß ein Einbau bereits neutralisierter und damit Säureanionen tragender Verbindungen in das Polyurethan nur dann möglich ist, wenn sich das Säureanion im Reaktionsansatz zur Herstellung des Polyurethans zumindest weitgehend löst.

Zur Neutralisation werden daher die Säuregruppen vor oder bevorzugt nach dem Einbau in die Polyurethankette mit einem basischen Neutralisationsmittel neutralisiert. Als basische Neutralisationsmittel sind in der Regel beispielsweise die Alkalimetalle wie Li, Na oder K sowie die Erdalkalimetalle wie Ca, Mg, Ba oder Sr geeignet, obwohl sie im Rahmen der vorliegenden Erfindung nicht bevorzugt sind. Besser geeignet und im Rahmen der vorliegenden Erfindung bevorzugt sind alle Salze der o.g. Metalle, die in der Lage sind unter Neutralisation der Säuregruppen zu reagieren, insbesondere die Carbonate, die Hydrogencarbonate oder die Hydroxide wie beispielsweise LiOH, NaOH, KOH oder Ca(OH)₂.

Ebenso zur Neutralisation geeignet und im Rahmen der vorliegenden Erfindung besonders bevorzugt sind organische, stickstoffhaltige Basen wie beispielsweise Ammoniak und Amine wie Trimethylamin, Triethylamin, Tributylamine, Dimethylanilin, Triphenylamin, Dimethylethanolamin, Methyldiethanolamin oder Triethanolamin sowie deren Mischungen. Die Neutralisation mit den stickstoffhaltigen, organischen Basen kann in organischer oder in wäßriger Phase erfolgen. Mit stickstoffhaltigen Basen neutralisierte Verbindungen der Komponente d) eignen sich daher in der Regel auch in neutralisierter Form zum Einbau in das Polyurethan in organischer Lösung.

Wenn eine Neutralisation der Säuregruppen gewünscht wird, kann das Neutralisationsmittel in einer solchen Menge zugesetzt werden, daß ein ausreichender Anteil der Säuregruppen, in der Regel etwa 0,1 bis 100%, neutralisiert wird. Gegebenenfalls kann auch ein noch geringerer Anteil der Säuregruppen neutralisiert werden, beispielsweise 0,05 oder 0,01%, insofern das Polyurethan trotzdem wasserlöslich oder zumindest wasserdispergierbar ist.

Die Herstellung des Polyurethanharzes kann stufenweise erfolgen, indem beispielsweise zunächst nur bestimmte, Isocyanaten gegenüber reaktionsfähige Gruppen tragende Edukte mit einem Überschuß an Polyisocyanaten umgesetzt werden, so daß Präpolymere mit Isocyanat-Endgruppen entstehen, welche dann mit weiteren Edukten umgesetzt werden können. Auf diese Weise können beispielsweise Blockcopolymere aufgebaut werden. Einfacher durchführbar ist jedoch die Reaktion zwischen einem Hydroxygruppen tragenden Eduktgemisch und den Polyisocyanaten, wobei das stöchiometrische Verhältnis zwischen NCO-Gruppen und OH-Gruppen in weiten Bereichen variiert werden kann. Um OH-Endgruppen zu erhalten sollte das NCO/OH-Verhältnis < 1 sein, zur Herstellung von Polyurethanharzen mit NCO-Endgruppen sollte ein Verhältnis > 1 gewählt werden. Eine Regulierung des Molekulargewichts der hergestellten Polyurethanharze kann ebenfalls über das NCO/OH-Verhältnis erfolgen, wobei Verhältnisse von 1 oder nahe 1 zu höheren Molekulargewichten führen als Verhältnisse, die weit davon entfernt sind. In der Regel sollte das NCO/OH-Verhältnis etwa zwischen 0,5 : 1 und 5 : 1 liegen.

Anstatt oder zusammen mit den Polyurethanharzen können Polyesterharze, die freie und/oder neutralisierte Säuregruppen am Polymerrückgrat tragen, im Rahmen der vorliegenden Erfindung eingesetzt werden.

Hierzu zählen Polyesterharze, wie sie durch Polykondensation von Diolen mit polyfunktionellen Carbonsäuren und weiteren freie und/oder neutralisierte Säuregruppen tragenden Reaktionskomponenten erhältlich sind. Die Säuregruppen können hierbei entweder durch Verwendung einer entsprechenden freie und/oder neutralisierte Säuregruppen tragenden Polyolkomponente, wie beispielsweise Dihydroxyalkyl- oder Dihydroxyarylcarbon- oder -sulfonsäuren oder durch Verwendung von Polycarbonsäuren oder gemischten Polycarboxysulfonsäuren, wobei jedoch mindestens eine freie oder neutralisierte Säuregruppe nach der Polykondensation erhalten bleiben muß, eingeführt werden. Zu der letztgenannten Gruppe, die im Sinne der Erfindung zum Aufbau der Polyesterharze eingesetzt werden kann, zählt beispielsweise das Trimellithsäureanhydrid.

Die freie und/oder neutralisierte Säuregruppen tragenden Polyesterharze können die Säuregruppen kettenständig und/oder endständig tragen, gegebenenfalls kann der Polyester neben den Säuregruppen noch weitere funktionelle Gruppen wie beispielsweise Hydroxygruppen tragen.

Ebenfalls sind solche Polyesterharze im Rahmen des vorliegenden Erfindung einsetzbar, wie sie weiter oben als Komponente d) zum Einbau in das Polyurethanharz offenbart wurden. Das Molekulargewicht der Polyesterharze beträgt in der Regel etwa 500 bis etwa 15.000, wobei Molekulargewichte von etwa 1000 bis etwa 10.000 und insbesondere etwa 1500 bis etwa 7000 bevorzugt sind.

Die Polyesterharze können ebenfalls unter Einbau hydrophiler Einheiten, wie beispielsweise unter Einbau von Polyetherdiolen hergestellt werden, um den resultierenden Polyester wasserlöslich oder zumindest wasserdispergierbar zu machen. Die Polyetherdiole sind in der Regel überwiegend, d.h. zu wenigstens etwa 50 Gew.-% aus Ethylenoxid hergestellt und weisen Molekulargewichte von etwa 180 bis etwa 5000 auf.

Zweck des Einbaus solcher hydrophiler, nichtionischer Gruppen ist es, die Polyesterkette auch dann wasserdispergierbar zu machen, wenn nur eine geringe Zähl von Säuregruppen am Polymerrückgrat vorhanden ist und/oder nur eine geringe Zahl der Säuregruppen oder keine Säuregruppen neutralisiert sind, d.h. in der ionischen Form vorliegen.

Die Neutralisierung der Säuregruppen des Polyesterharzes kann auf die oben beschriebene Weise entweder mit anorganischen oder mit organischen Neutralisationsmitteln erfolgen.

Neben der Anwendung auf freie und/oder neutralisierte Säuregruppen tragenden Polyurethan- oder Polyesterharzen ist das erfindungsgemäße Verfahren auch für die Vernetzung von Bindemitteln geeignet, die das Produkt der Polymerisation olefinisch ungesättigter Monomerer darstellen.

Die aus den olefinisch ungesättigten Monomeren hergestellten Polymere können Sulfonat-, Carboxylat- und/oder Phosphonatgruppen tragen, wobei in den erfindungsgemäßen Beschichtungsmitteln der Einsatz von Sulfonat- und/oder Carboxylatgruppen tragenden Polymeren und insbesondere der Einsatz von Carboxylatgruppen tragenden Polymeren bevorzugt ist.

Die Herstellung der freie und/oder neutralisierte Säuregruppen aufweisenden Polymeren erfolgt durch die an sich bekannte Copolymerisation von olefinisch ungesättigten Monomeren, wobei als Monomere freie oder neutralisierte Säuregruppen tragende Monomere im allgemeinen zusammen mit weiteren Monomeren copolymerisiert werden. Die Mitverwendung der Säuregruppen aufweisenden Monomeren erfolgt zwecks Einbaus von Carboxyl- und/oder Sulfonsäuregruppen in die Copolymerisate, die aufgrund ihrer Hydrophilie die Wasserlöslichkeit bzw. -dispergierbarkeit der Polymerisate gegebenenfalls nach partieller oder vollständiger Neutralisation der Säuregruppen gewährleisten. Bei den Säuregruppen handelt es sich vorzugsweise um Carboxylgruppen.

Die Menge der mitverwendeten Monomere mit freien Säuregruppen und der Neutralisationsgrad der zunächst erhaltenen freie Säuregruppen tragenden Polymerisate ergibt in der Regel für das fertige Bindemittel eine Säurezahl von etwa 5 bis 150 mg KOH/g Feststoff. In Abhängigkeit vom Molekulargewicht der Polymerisate und ihrem Gehalt an Säureanionen bzw. an freien Säuregruppen, insbesondere Carboxylgruppen, handelt es sich auch bei den wäßrigen, die Polymerisate enthaltenden Systemen um echte Dispersionen, kolloiddisperse oder molekulardisperse Dispersionen, im allgemeinen jedoch um sogenannte Teildispersionen, d.h. um wäßrige Systeme, die zum Teil molekulardispers und zum Teil kolloiddispers sind.

Geeignete Comonomere mit freien Säuregruppen sind im Prinzip alle olefinisch ungesättigten, polymerisierbaren Verbindungen, die mindestens eine Carboxyl- Sulfonsäure- und/oder Phosphonsäuregruppe aufweisen, wie beispielsweise olefinisch ungesättigte Mono- oder Dicarbonsäuren des Molekulargewichtsbereichs 72 bis 207, wie Acrylsäure, Methacrylsäure, Maleinsäure, Itaconsäure oder Sulfonsäuregruppen aufweisende olefinisch ungesättigte Verbindungen wie beispielsweise 2-Acryl-amido-2-methylpropansulfonsäure oder beliebige Gemische derartiger olefinisch ungesättigter Säuren. Neben diesen Monomeren können noch weitere olefinisch ungesättigte Comonomere zum Aufbau des Polymeren hinzugezogen werden, die keinen oder nur einen geringen Beitrag zu dessen Hydrophilie leisten. In der Regel handelt es sich hierbei um die Ester α,β-ungesättigter Mono- oder Polycarbonsäuren, wobei insbesondere die Ester der Acryl- oder der Methacrylsäure bevorzugt sind. Ferner können aromatische Verbindungen mit olefinisch ungesättigten Doppelbindungen wie beispielsweise Styrol oder Alkylstyrole als Comonomere eingesetzt werden.

Ebenfalls möglich ist die Copolymerisation von Estern von Carbonsäuren mit ungesättigten Alkoholen, wie beispielsweise Vinylacetat, Vinylpropionat, Vinylbutyrat bis hin zu den Vinylestern höherer Fettsäuren, wie beispielsweise Vinylmyristat oder Vinylstearat. In der Regel werden jedoch die Ester der Acrylsäure bzw. der Methacrylsäure eingesetzt, wobei der Alkoholrest üblicherweise etwa 1 bis 18, vorzugsweise etwa 1 bis 8 Kohlenstoffatome aufweist. Hierzu zählen z.B. Methylacrylat, Ethylacrylat, Isopropylacrylat, n-Propylacrylat, n-Butylacrylat, 2-Ethylhexylacrylat oder n-Stearylacrylat. Gegebenenfalls können auch Comonomere eingesetzt werden, die durch andere funktionelle Gruppen funktionalisiert sind. Hierzu zählen beispielsweise Epoxidgruppen aufweisende Comonomere, wie etwa Glycidylacrylat oder Glycidylmethacrylat. Ebenso können Hydroxylgruppen aufweisende Monomere, wie beispielsweise Hydroxyethylacrylat, Hydroxypropylacrylate oder Hydroxybutylacrylate oder die entsprechenden Derivate der Methacrylsäure copolymerisiert werden.

In der Regel beträgt der Anteil an Säuregruppen tragenden Monomeren am gesamten Monomergemisch etwa 2 bis 98 Gew.-%, wobei Anteile zwischen 5 und 50 Gew.-% und insbesondere 10 bis 30 Gew.-% bevorzugt sind.

Die Herstellung der Polymerisate wird üblicherweise durch Masse-, Lösungs-, Emulsions- oder Suspensionspolymerisationsverfahhren durchgeführt. Vorzugsweise erfolgt die Herstellung der olefinischen Polymerisate in organischer Lösung oder in wäßriger Emulsion. Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist.

Um besondere Effekte zu erzielen ist es möglich, einen Teil der Monomeren langsamer, schneller, früher beginnend, später beginnend, früher endend und/oder später endend zuzudosieren. Durch die hier auftretenden Effekte können dem Polymeren unterschiedliche Eigenschaften verliehen werden. Als Lösungsmittel für die Polymerisation kommen beispielsweise Aromaten, wie Benzol, Xylol, Chlorbenzol, Ester, wie Acylacetat, Butylacetat, Methylglykolacetat, Ethylglykolacetat, Methoxypropylacetat, Ether, wie Butylglykol, Tetrahydrofuran, Dioxan, Ethylenchlorid oder Trichlormonofluorethan, in Betracht.

Die durch Radikale initiierte Polymerisation kann durch Initiatoren ausgelöst werden, deren Halbwertszeiten des Radikalzerfalls bei 80 bis 180°C zwischen 0,01 und 400 Minuten liegen. Im allgemeinen erfolgt die Copolymerisationsreaktion im genannten Temperaturbereich, vorzugsweise zwischen 100 und 160°C, unter einem Druck von 10³ bis 2 x 10⁴ mbar, wobei sich die genaue Polymerisationstemperatur nach der Art des Initiators richtet. Die Initiatoren werden in Mengen von 0,05 bis etwa 6 Gew.-%, bezogen auf die Gesamtmenge an Monomeren, eingesetzt. Geeignete Initiatoren sind z.B. aliphatische Azoverbindungen, wie Azoisobutyronitril, sowie Peroxide wie z.B. Dibenzoylperoxid, t-Butylperpivalat, t-Butylper-2-ethylhexanoat, t-Butylperbenzoat, t-Butylhydroperoxid, Di-t-butylperoxid, Cumolhydroperoxid sowie Dicyclohexyl- und Dibenzylperoxidicarbonat. Gegebenenfalls können zur Regelung des Molekulargewichts übliche Regler eingesetzt werden. Neben den reinen Polyolefin-Polymeren können auch sogenannte acrylatgepfropfte Polyester- oder Polyurethanharze im erfindungsgemäßen Verfahren eingesetzt werden, wobei entweder das Acrylatpolymer oder das Polyester- bzw. das Polyurethanharz oder beide freie und/oder neutralisierte Säuregruppen tragen.

Solche acrylatgepfropften Harze lassen sich durch Polymerisation einer säuregruppenhaltigen Monomermischung in einem Polyester- oder Polyurethanharz erzeugen. In der Regel ist es dabei von Vorteil, wenn das Polyester- oder das Polyurethanharz unter Verwendung ungesättigter Bausteine, wie beispielsweise ungesättigter Dicarbonsäuren oder ungesättigter Diole, hergestellt wurden. In solchen Fällen ergeben sich nach der Polymerisation der Acrylatmonomere echte Pfropfcopolymere, bei denen die Polyacrylatkette kovalent an der Polyester- bzw. Polyurethankette gebunden ist.

Die hier beschriebenen freie und/oder neutralisierte Säuregruppen tragenden Polymere stellen nur einen Ausschnitt aus der möglichen Palette einsetzbarer Polymere dar. Grundsätzlich sind alle solchen Polymeren geeignet, die freie oder neutralisierte Säuregruppe am Polymerrückgrat tragen, wobei beispielsweise Carbo-xylat-, Sulfonat- oder Phosphonatgruppen, am geeignetsten sind. Weitere Polymere die diese Eigenschaften erfüllen, können selbstverständlich auch im Gemisch mit den oben genannten Polymeren eingesetzt werden, wobei binäre, ternäre oder noch höhere Gemische möglich sind. Auch die detailliert beschriebenen Polymere können einzeln oder in Mischung untereinander im erfindungsgemäßen Sinne eingesetzt werden.

Die in Wasser dispergierten, Säuregruppen aufweisenden Polymere haben einen Gehalt an Säuregruppen von etwa 20 bis etwa 2.000, bevorzugt 50 bis 1.000 und insbesondere bevorzugt von etwa 100 bis etwa 800 mmol/kg Festharz.

Zur Vernetzung der in wäßriger lösung oder wäßriger Dispersion vorliegenden Bindemittel enthält die erfindungsgemäße Beschichtungsmittelzusammensetzung einen Vernetzer der allgemeinen Formel I

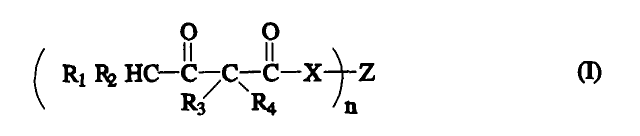

Hierin stehen R₁, R₂, R₃ und R₄ unabhängig voneinander für Wasserstoff oder Alkyl-, Aryl- und/oder Aralkylgruppen mit 1 bis 24 C-Atomen oder Gemischen aus zwei oder mehr davon. X steht für Sauerstoff, Schwefel und/oder -N(R₅)-, wobei R₅ für einen Alkyl-, Aryl oder Aralkylrest mit 1 bis 24 C-Atomen oder für Wasserstoff steht. Z steht für ein n-funktionelles, gegebenenfalls durch weitere Gruppen substituiertes Alkyl-, Aryl- oder Aralkylradikal, wobei die Molmasse des Vernetzers nach der allgemeinen Formel I unterhalb von 10.000, bevorzugt unterhalb von 5.000 und besonders bevorzugt unterhalb von 1.000 liegt. In einer bevorzugten Ausführungsform der Erfindung kann n Werte von 2 bis etwa 8 annehmen.

Der in den erfindungsgemäßen Beschichtungsmittelzusammensetzungen eingesetzte Vernetzer läßt sich nach bekannten Methoden der organischen Chemie, beispielsweise durch Umsetzung von geeignet substituierten Diketenen mit geeigneten Nukleophilen nach folgendem Schema herstellen:

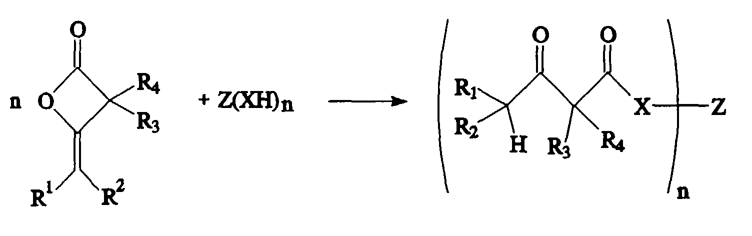

Das als Edukt eingesetzte Diketen läßt sich durch die dem Fachmann bekannte Ketendimerisierung aus unterschiedlichsten Ketenen gewinnen (s. z.B. *Römpp Chemie-Lexikon*, 9. Aufl. (1990), S. 976 und 2224 und dort genannte Literatur). Bevorzugt eingesetzt wird hier zum einen das Diketen selbst, wobei die Reste R₁, R₂, R₃ und R₄ jeweils für Wasserstoff stehen, sowie das aus Stearylketen hergestellte Diketen, wobei die Reste R₁ und R₃ für einen Alkylrest mit 16 C-Atomen und die Reste R₂ und R₄ für Wasserstoff stehen.

Durch das Nucleophil Z(XH)ₙ erfolgt nun eine Ringöffnung des Lactonrings des Diketens, wobei nach Tautomerisierung die der Zielstruktur I entsprechende Verbindung entsteht. Bei der Verbindung Z(XH)ₙ handelt es sich bevorzugt um einen Alkohol ein Thiol oder ein Amin. Bevorzugt ist es, an dieser Stelle Alkohole oder Amine einzusetzen da es ansonsten gegebenenfalls zu Geruchsbelästigungen kommen kann (Thiole).

Z stellt bevorzugt ein lineares oder insbesondere bevorzugt ein verzweigtes Alkylradikal mit n-facher Funktionalität XH gegenüber dem Diketen dar. Besonders vorteilhaft ist es, wenn die Verbindung Z(XH)ₙ einen bekannten, leicht zugänglichen mehrwertigen Alkohol darstellt. Bevorzugt sind hier beispielsweise Ethylenglykol, Propylenglykole, Butylenglykole, Diethylenglykol, Dipropylenglykole, Dibutylenglykole, höhere Alkylglykole, höhere dimere oder oligomere Alkylglykole (Polyether), Glycerin, Trimethylolpropan, Pentaerythrit, Glucose, andere Kohlenhydrate, oligomere Kohlenhydrate, teilveresterte Kohlenhydrate, wie beispielsweise teilveresterte Glucose, oligomere oder polymere polyfunktionelle Alkohole, wie beispielsweise Oligo- oder Polyglycerin, Oligo- oder Polytrimethylolpropan, vorzugsweise mit der Maßgabe, daß die Funktionalität der Verbindung Z(XH)ₙ 8 nicht übersteigt, mithin n nicht größer als 8 wird. Ebenfalls möglich, aber nicht bevorzugt ist es, Verbindungen Z(XH)ₙ mit einer Funktionalität gegenüber Diketen von mehr als 8 einzusetzen und diese Verbindung mit einer solchen Menge Diketen umzusetzen, daß Z(XH)ₙ im statistischen Mittel mit vorzugsweise maximal 8 Diketenmolekülen reagiert. Die Zahl der eingesetzten Ketenmoleküle pro Molekül der Verbindung Z(XH)ₙ sollte jedoch bevorzugt äquivalent zur Funktionalität des eingesetzten Nukleophils sein, um die Bildung von Nebenprodukten zu vermeiden.

Der in den Beschichtungsmittelzusammensetzungen enthaltene Vernetzer kann so aufgebaut sein, daß Z für einen n-funktionellen, gegebenenfalls durch weitere Gruppen substituierten Alkyl-, Aryl oder Aralkylrest steht. Im Sinne der Erfindung ist es jedoch vorteilhaft, wenn Z für einen n-funktionellen Alkylrest steht. Ebenfalls vorteilhaft ist es, wenn n Werte von 2 bis 6 und insbesondere 2 bis 4 annehmen kann. Bevorzugt ist es, als Verbindung Z(XH)ₙ niedermolekulare Polyole, wie beispielsweise Pentaerythrit, Glycerin oder Trimethylolpropan einzusetzen, wobei der Einsatz von Trimethylolpropan bevorzugt ist.

Eine weitere Möglichkeit zur Herstellung der in den erfindungsgemäßen Beschichtungsmittelzusammensetzungen verwendeten Vernetzer besteht darin, eine Substanz der allgemeinen Formel I, wobei X in der Regel für Sauerstoff oder Schwefel und Z für ein einwertiges Alkyl- oder Arylradikal steht und wobei n = 1 ist, in einer Umesterungsreaktion mit den beschriebenen mehrwertigen Alkoholen umzusetzen. In einem solchen Falle wird unter Austausch des Alkohols der in den erfindungsgemäßen Beschichtungsmittelzusammensetzungen benötigte Vernetzer nach der allgemeinen Formel I erhalten, während der aus dem Edukt stammende einwertige Alkohol ZXH auf üblichem Wege aus dem Reaktionsgemisch entfernt wird oder in diesem verbleibt.

Die erfindungsgemäßen Beschichtungsmittelzusammensetzungen enthalten den Vernetzer der allgemeinen Strukturformel I bevorzugt in der Form, in der die Reste R₁ bis R₄ für Wasserstoff stehen.

Weiterhin ist es bevorzugt, daß der in den Beschichtungsmittelzusammensetzungen enthaltene Vernetzer so aufgebaut ist, daß X für Sauerstoff oder -N(R₅)-, wobei R₅ für einen Alkyl- oder Arylrest mit 1 bis 24 C-Atomen oder Wasserstoff steht. Besonders bevorzugt ist es, wenn X für Sauerstoff steht.

Die Molmasse des in den Beschichtungsmittelzusammensetzungen enthaltenen Vernetzers der allgemeinen Strukturformel I beträgt vorteilhafterweise etwa 200 bis etwa 600, wobei es bevorzugt ist, wenn die Molmasse zwischen etwa 300 und etwa 450 liegt.

Gegenstand der Erfindung ist ebenfalls ein Verfahren zur Herstellung einer Beschichtungsmittelzusammensetzung, in dem
a) ein organisches, freie und/oder neutralisierte Säuregruppen tragendes Polymeres in wäßriger Lösung und
b) ein Vernetzer der allgemeinen Strukturformel I 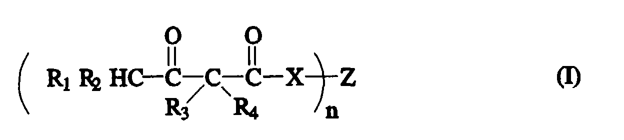 wobei
   R₁, R₂, R₃ und R₄ unabhängig voneinander für Wasserstoff und/ oder Alkyl-, Aryl- oder Aralkylreste mit 1 bis 24 C-Atomen odre Gemischen aus zwei oder mehr davon,
   X für Sauerstoff, Schwefel und/oder -N(R₅)- steht,
      wobei R₅ für einen Alkyl-, Aryl- und/oder Aralkylrest mit 1 bis 24 C-Atomen oder Wasserstoff steht
      sowie
   Z für einen n-funktionellen, gegebenenfalls durch weitere Gruppen substituierten Alkyl-, Aryl- oder Aralkylrest steht und die Molmasse des Vernetzers unterhalb von 10.000, bevorzugt unterhalb von 5.000 und besonders bevorzugt unterhalb von 1.000 liegt,
   vermischt werden.

In einer bevorzugten Ausführungsform der Erfindung wird ein Vernetzer der allgemeinen Formel I eingesetzt, wobei n Werte von 2 bis etwa 8 annehmen kann.

Gewünschtenfalls können im Rahmen des erfindungsgemäßen Verfahrens auch noch weitere lackübliche Zusatzstoffe bei der Herstellung der erfindungsgemäßen Beschichtungsmittelzusammensetzung mitvermischt werden.

Die so erhalten, erfindungsgemäßen Beschichtungsmittelzusammensetzungen zeichnen sich durch besonders gute Lagerstabilität und äußerst geringe Toxizität aus. Das Vermischen der einzelnen Komponenten kann zu beliebigen Zeitpunkten vor der Verwendung der Dispersion als Beschichtungsmittel vorgenommen werden. Die Beschichtungsmittelzusammensetzung ist demnach als Ein- oder Zwei-Komponenten-Beschichtungsmittel, bevorzugt jedoch als Ein-Komponenten-Beschichtungsmittel anwendbar. Unter Ein-Komponenten-Beschichtungsmittel wird im Sinne der vorliegenden Erfindung ein solches Beschichtungsmittel verstanden, in dem Vernetzer und Polymeres zusammen in der Beschichtungsmittelzusammensetzung vorliegen und über längere Zeiträume ohne Vernetzung sowie ohne Qualitätseinbußen für die spätere Beschichtung lagerbar sind.

Die auf diese Weise hergestellten Beschichtungsmittelzusammensetzungen werden im allgemeinen nach in der Beschichtungsindustrie üblichen Verfahren auf das zu beschichtende Werkstück aufgetragen, also beispielsweise durch Walzen, Rakeln, Spritzen, Streichen, Gießen oder Tauchen. Die anschließende Trocknung bzw. Aushärtung des Lacks kann sowohl durch Kalthärtung (d.h. durch Trocknung bei Temperaturen von 0°C bis 80°C, bevorzugt bei Raumtemperatur) oder nach sogenannten Einbrennverfahren (d.h. durch Trocknung bei Temperaturen von üblicherweise 80°C bis 280°C) erfolgen. Die Umgebungstemperatur kann auch unter 0°C liegen, insofern die Beschichtungsmittelzusammensetzung unter diesen Bedingungen einen homogenen Film bildet. Die Trocknung bei Temperaturen > etwa 100°C setzt voraus, daß eine gewisse Vortrocknung bei Umgebungstemperatur oder bei einer Temperatur < etwa 100°C erfolgt.

Eine optimale Beständigkeit der verfilmten Beschichtungsmittelzusammensetzung entsteht dann, wenn der Film thermisch aktiviert wird. Die bevorzugte Trocknungstemperatur liegt also oberhalb von 100°C. Wird bei der Trocknung eine Temperatur von etwa 180°C überschritten, so kann es unter Umständen zu Vergilbungserscheinungen im Film kommen, so daß der bevorzugte Trocknungsbereich bei etwa 100°C bis etwa 180°C und insbesondere bei etwa 120°C bis 160°C liegt.

Der Vernetzer kann im Rahmen der Herstellung von freien und/oder neutralisierten Säuregruppen tragenden Polymerharzen nach Ablauf der Polymerisation, vor, während oder nach der Dispergierungsstufe zugesetzt werden. Insofern der Vernetzer im Rahmen der Polymerisationsreaktion nicht deaktiviert wird, kann er jedoch auch schon vor oder während der Polymerisationsreaktion zugegeben werden.

Der Vernetzer kann auch in die wäßrige Dispersion, die gegebenenfalls bereits weitere lackübliche Zusatzstoffe enthalten kann, eingearbeitet werden.

Der Vernetzer kann auch mit einem oder mehreren lacküblichen Zusatzstoff(en) abgemischt werden, die entsprechende Zubereitung wird dann mit der wäßrigen Dispersion vermischt.

Das molare Verhältnis der Säuregruppen in der wäßrigen Dispersion zu den reaktiven Zentren des Vernetzers liegt bei 10 : 1 bis 0,2 : 1, bevorzugt bei 5 : 1 bis 0,4 : 1 und besonders bevorzugt bei 2 : 1 bis 0,5 : 1.

Die erfindungsgemäße Beschichtungsmittelzusammensetzung kann noch weitere lackübliche Zusätze enthalten. Hierzu zählen insbesondere Verdickungsmittel, Pigmente, organische Lösungsmittel in Anteilen von nicht mehr als 20%, Farbstoffe, Emulgatoren, Tenside, Wärmestabilisatoren, Verlaufshilfsmittel, Netzmittel, Füller, Sedimentationsinhibitoren, Flammenhemmer, UV-Absorber und/oder Antioxidantien, die zu jedem beliebigen Zeitpunkt während der Herstellung der Beschichtungsmittelzusammensetzung gleichzeitig oder nacheinander zugegeben werden können, insofern sie nicht mit dem Vernetzer und/oder dem Bindemittel unter Desaktivierung der zur Vernetzung benötigten Gruppen reagieren.

Die erfindungsgemäßen Beschichtungsmittelzusammensetzungen können auf eine Vielzahl von Substraten aufgetragen werden, beispielsweise Holz, Metall, Glas, Stoff, Leder, Beton, Papier, Kunststoff, Kunststoffschaum und dergleichen.

Gegenstand der Erfindung ist daher auch ein Verfahren zur Beschichtung von Substraten, indem eine wäßrige Beschichtungsmittelzusammensetzung nach der vorliegenden Erfindung auf das Substrat aufgebracht wird.

Ebenfalls Gegenstand der Erfindung sind damit beschichtete Gegenstände, erhältlich durch das beschriebene Beschichtungsverfahren.

### BEISPIELE

### I. Dispersionen

### a) Vergleichsdispersion 1

Als Vergleichsdispersion wird eine wäßrige Polyester-Polyurethan-Dispersion, hergestellt aus 400 Teilen eines hydroxylterminierten Polyesters auf Basis Isophthalsäure/Adipinsäure und Hexandiol-1,6 (1:1) mit einer Molmasse von 2000 g/mol, 40,2 Teilen Dimethylolpropionsäure, 72,1 Teilen Butandiol 1,4, 316,8 Teilen Isophorondiisocyanat, 21,4 Teilen Dimethylethanolamin und 8,6 Teilen Diethylentriamin, die einen Feststoffgehalt von etwa 30 Gew.-% aufweist, eingesetzt.

### b) Dispersion 1

Die erfindungsgemäße Dispersion 1 wurde durch die Zugabe von 4,2 Teilen Trimethylolpropantris(acetessigester) zu 300 Teilen Vergleichsdispersion 1 hergestellt. Der Feststoffgehalt betrug 31 Gew.-%.

### c) Vergleichsdispersion 2

Die Vergleichsdispersion 2 wurde durch die Zugabe von 1,5 Teilen Trimethylolpropan zu 300 Teilen Vergleichsdispersion 1 hergestellt.

### d) Vergleichsdispersion 3

Die Vergleichsdispersion 3 wurde durch die Zugabe von 3,3 Teilen Pentaerythrittris(glycidylether) (Basoset® 162) zu 300 Teilen Vergleichsdispersion 1 hergestellt.

### II. Prüfmethoden

### a) Verfilmung auf Blech

Die Dispersionen wurden mit einem Filmziehrahmen auf Blechteile der Qualität St 1405 mit einer Schichtdicke von 150-200 µm naß aufgezogen, 10 Minuten bei Raumtemperatur vorgetrocknet und anschließend eingebrannt.

### b) Erichsentiefung

Die Prüfung erfolgte nach ISO 1520.

### c) Gitterschnitt

Die Prüfung erfolgte nach DIN 53 151.

### d) Oberflächenhärte

Die Filmhärte (Pendelhärte) wurde nach DIN 53 157 mit einem König-Gerät bestimmt. Es wurde die Anzahl der Doppelhübe ermittelt.

### e) Acetontest

Ein mit Lösungsmittel getränkter Wattepfropfen wurde auf einer ausgewählten Lackstelle des nach a) beschichteten Blechs unter leichtem Andrücken hin und her gerieben (1 x hin, 1 x her = 1 Doppelhub DH). Diese Prüfung erstreckte sich über 50 bis 100 DH. Sofern der Film bis dahin nicht abgetragen wurde, gilt der Film als vernetzt bzw. ausgehärtet.

### f) Schwefelsäuretest 28-ig %

Die Durchführung der Prüfung erfolgte nach Vorgabe der Firma Dr. Kurt Herberts (DKH), Wuppertal, auf folgende Weise: ein kleiner Wattepfropfen, der in 28%iger Schwefelsäure getränkt worden war, wurde auf den Prüfling aufgelegt. Nach 4 Stunden im Umlufttrockenschrank bei 60°C wurde die Probe dann nach DIN 53 230 Tab. 1 beurteilt (von 0 bis 5; 0 = *sehr gut,* 5 = *schlecht*).

### g) Schwefelsäuretest 38%ig und Natronlaugetest 1%ig und 5%ig

Die Durchführung der Prüfung erfolgte analog zur Methode f), wobei die Lagerung 24 Stunden bei Raumtemperatur durchgeführt wurde.

### III. Prüfergebnisse

Die Dispersionen 1 und 1(V) wurden auf Metallbleche aufgetragen und bei den angegebenen Bedingungen gehärtet. Beide Filme sind nach dem Einbrennvorgang optisch vergleichbar, klar, glänzend und farblos. Die Prüfergebnisse sind in der nachfolgenden Tabelle 1 dargestellt.

**Tabelle 1**

| Dispersion* | 1 | 1 (V) |
|---|---|---|
| Lacktrocknung | 30 min/150°C | 30 min/150°C |
| Erichsenwert (mm) | > 10 | > 10 |
| Gitterschnitt (0-5**) | 0 | 0 |
| Pendelhärte (Anzahl DH) | 98 | 101 |
| Acetontest (Anzahl DH) | > 100 | 30 |
| H₂SO₄-Test, 28%ig; 4h/60°C (0-5**) | 0 | 1 |
| H₂SO₄-Test, 38%ig; 24h/Raumtemp.°C (0-5**) | 0 | 0 |
| NaOH-Test, 1%ig; 24h/Raumtemp.°C (0-5**) | 0 | 0 |
| NaOH-Test, 5%ig; 24h/Raumtemp.°C (0-5**) | 2 | 2 |

| | | |
|---|---|---|
| * Zu 100 Teilen der unter I. hergestellten Dispersion wurden jeweils 8 Teile Ethylenglykolmonobutylether gegeben. | | |
| ** 0: beste Note | | |

Die Ergebnisse von Tabelle 1 verdeutlichen die Verbesserung der Lösemittelbeständigkeit durch die erfindungsgemäße Behandlung der Dispersion mit dem niedermolekularen Vernetzer bei sonst weitgehend unveränderten übrigen Eigenschaften.

In einer weiteren Prüfung wurden verschiedene Vernetzer miteinander verglichen. Die Prüfergebnisse sind in der nachfolgenden Tabelle 2 dargestellt.

**Tabelle 2**

| Dispersion* | 1 | 2 (V) | 3 (V) |
|---|---|---|---|
| Lacktrocknung | 30 min/140°C | 30 min/140°C | 30 min/140°C |

| Gitterschnitt (0-5**) | | | |
|---|---|---|---|
| sofort | 0-1 | 0-1 | 0-1 |
| nach 2 Wo | 0-1 | 0-1 | 0-1 |
| nach 4 Wo | 0 | 0 | 0 |
| nach 8 Wo | 0 | 0 | 0 |

| Pendelhärte (Anzahl DH) | | | |
|---|---|---|---|
| sofort | 89 | 84 | 82 |
| nach 2 Wo | 85 | 94 | 90 |
| nach 4 Wo | 94 | 87 | 93 |
| nach 8 Wo | 90 | 90 | 96 |

| Acetontest (Anzahl) DH | | | |
|---|---|---|---|
| sofort | 40 | 3 | 6 |
| nach 2 Wo | >50 | 5 | 6 |
| nach 4 Wo | >50 | 7 | 7 |
| nach 8 Wo | 44 | 6 | 14 |

| H₂SO₄-Test, 38%-ig 24h/RT (0-5**) | | | |
|---|---|---|---|
| sofort | 0 | 0 | 0 |
| nach 2 Wo | 0 | 0 | 0 |
| nach 4 Wo | 0 | 0 | 0 |
| nach 8 Wo | 0 | 0 | 0 |

| NaOH-Test, 1%-ig 24h/RT (0-5**) | | | |
|---|---|---|---|
| sofort | 5 | 5 | 5 |
| nach 2 Wo | 2 | 5 | 5 |
| nach 4 Wo | 0 | 5 | 5 |
| nach 8 Wo | 0 | 5 | 5 |

| | | | |
|---|---|---|---|
| * Zu 100 Teilen der unter I. hergestellten Dispersionen wurden jeweils 2,2 Teile Ethylenglykolmonobutylether zugegeben. | | | |
| ** 0: beste Note | | | |

Die Ergebnisse der Tabelle 2 verdeutlichen, daß nur im Falle der erfindungsgemäßen Dispersion I eine verbesserte Beständigkeit gegenüber Lösemittel und Alkali erreicht wird, bei sonst vergleichbaren Eigenschaften.

## Patentansprüche

1. Wäßrige Beschichtungsmittelzusammensetzung, enthaltend:
a) ein organisches, freie und/oder neutralisierte Säuregruppen tragendes Polymeres in wäßriger Lösung oder Dispersion und
b) einen Vernetzer nach der allgemeinen Strukturformel I 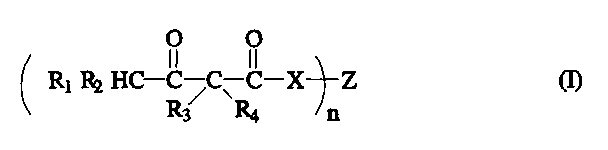 wobei
R₁, R₂, R₃ und R₄ unabhängig voneinander für Wasserstoff oder Alkyl-, Aryl- oder Aralkylreste mit 1 bis 24 C-Atomen oder Gemischen aus zwei oder mehr davon,
X für Sauerstoff, Schwefel und/oder -N(R₅)- steht,
wobei R₅ für einen Alkyl-, Aryl- oder Aralkylrest mit 1 bis 24 C-Atomen oder Wasserstoff steht
sowie
Z für einen n-funktionellen, gegebenenfalls durch weitere Gruppen substituierten Alkyl-, Aryl- oder Aralkylrest steht,
dadurch gekennzeichnet, daß die Molmasse des Vernetzers unterhalb von 10.000 liegt.

2. Beschichtungsmittelzusammensetzung nach Anspruch 1, dadurch gekennzeichnet, daß die Reste R₁ bis R₄ für Wasserstoff stehen.

3. Beschichtungsmittelzusammensetzung nach einem der Ansprüche 1 oder 2, dadurch gekennzeichnet, daß X für Sauerstoff steht.

4. Beschichtungsmittelzusammensetzung nach einem der Ansprüche 1 bis 3, dadurch gekennzeichnet, daß Z für ein n-funktionelles Alkylradikal steht.

5. Beschichtungsmittelzusammensetzung nach einem der Ausprüche 1 bis 4, dadurch gekennzeichnet, daß n Werte von 2 bis 6, insbesondere von 2 bis 4 annehmen kann.

6. Beschichtungsmittelzusammensetzung nach einem der Ansprüche 1 bis 5, dadurch gekennzeichnet, daß die Molmasse des Vernetzers 200 bis 600 beträgt.

7. Verfahren zur Herstellung einer Beschichtungsmittelzusammensetzung, dadurch gekennzeichnet, daß
a) ein organisches, freie und/oder neutralisierte Säuregruppen tragendes Polymeres in wäßriger Lösung und
b) ein Vernetzer der allgemeinen Stukturformel I 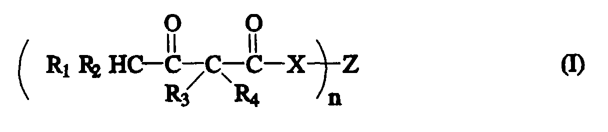 wobei
R₁, R₂, R₃ und R₄ unabhängig voneinander für Wasserstoff oder Alkyl-, Aryl oder Aralkylreste mit 1 bis 24 C-Atomen oder Gemischen aus zwei oder mehr davon,
X für Sauerstoff, Schwefel und/oder -N(R₅)- steht,
wobei R₅ für einen Alkyl-, Aryl- oder Aralkylrest mit 1 bis 24 C-Atomen oder Wasserstoff steht
sowie
Z für einen n-funktionellen, gegebenenfalls durch weitere Gruppen substituierten Alkyl-, Aryl- oder Aralkylrest steht, und wobei n Werte von 2 bis 8 annehmen kann und die Molmasse des Vernetzers unterhalb von 10.000 liegt,
vermischt werden.

8. Verfahren nach Anspruch 7, dadurch gekennzeichnet, daß weitere lackübliche Zusatzstoffe mitvermischt werden.

9. Verfahren zur Beschichtung von Substraten, dadurch gekennzeichnet, daß eine wäßrige Beschichtungsmittelzusammensetzung nach einem der Ansprüche 1 bis 8 auf das Substrat aufgebracht wird.

10. Beschichtete Gegenstände, erhältlich nach dem Verfahren nach Anspruch 9.
